# EUROPEAN PATENT APPLICATION

(11) **EP 3 484 176 A1**
(43) Date of publication of application: **15.05.2019**
(21) Application number: 17201133.0
(22) Date of filing: 10.11.2017
(51) Int. Cl.: H04R 3/00, H04R 3/12, H04S 7/00

(54) **VEHICLE AUDIO PRESENTATION CONTROLLER**

(71) Applicant: NXP B.V., 5656 AG Eindhoven (NL)
(72) Inventor: Hedebouw, Bram, 5656 AG Eindhoven (NL); Gautama, Temujin, 5656 AG Eindhoven (NL)
(74) Representative: Bradler, Carola Romana

(57) **Abstract**

A vehicle audio presentation controller configured to receive first audio at a first audio input and second audio at a second audio input, the controller configured to perform the following:
based on said first audio and said second audio for presentation in a vehicle and context information associated with said first audio;
provide for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio.

## Description

The present disclosure relates to a vehicle audio presentation controller, associated methods and a vehicle including such a controller.

Vehicles may include devices to provide for audio playback therein. It is becoming common for numerous in-vehicle systems to make use of audio presentation to alert, inform or interact with the vehicle occupants.

According to a first aspect of the present disclosure there is provided a vehicle audio presentation controller configured to receive first audio at a first audio input and second audio at a second audio input, the controller configured to perform the following:
based on said first audio and said second audio for presentation in a vehicle and context information associated with said first audio;
provide for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio.

In one or more embodiments, at least one of the plurality audio-modifying effects comprises;
a perceived-direction-effect configured to present one of the first audio and the second audio to one of a plurality of speakers at spaced locations in the vehicle with a delay relative to another of the plurality of speakers such that the one of the first audio and the second audio is thereby perceived to originate from a particular direction

In one or more embodiments, at least one of the plurality audio-modifying effects comprises;
a channel decorrelation effect configured to present one of the first audio and the second audio to at least two of a plurality of speakers at spaced locations in the vehicle such that the one of the first audio and the second audio is perceived not to originate from a particular direction.

In one or more embodiments, the audio-modifying-effect-profile of the plurality of different predetermined audio-modifying-effect-profiles is selected at least based on the context information and one or more of:
a) the volume of second audio;
b) the frequency content of the second audio.

In one or more embodiments, the controller includes a respective audio-effect application block coupled to the first and second audio inputs, each audio-effect application block configured to apply one or more of the plurality of audio-modifying effects to the respective first audio and second audio.

In one or more embodiments, the first audio comprises audio having a plurality of frequency components and the second audio comprises audio having a plurality of frequency components; and at least one of the plurality of audio-modifying-effects comprises:
a tone-volume-effect configured to reduce the volume of a sub-set of the frequency components of the second audio relative to the frequency components outside the sub-set, the frequency components of the sub-set corresponding, at least in part, to the frequency components of the first audio.

In one or more embodiments, the controller, based on the on-going presentation of the second audio at the time the first audio is received at the first input, is configured to apply an audio-modifying effect of the audio-modifying-effect-profile to the second audio in advance of the first audio being audibly presented.

In one or more embodiments, the plurality of audio-modifying-effects includes the following audio-modifying effect:
a relative-volume-effect configured to present one of the first audio and the second audio to one of the plurality of speakers with a different volume relative to another of the plurality of speakers.

In one or more embodiments, one or more of the audio-modifying effects of the audio-modifying-effect-profile are applied gradually.

In one or more embodiments, the first audio comprises one or more of an announcement; an audible alert; audio from a navigation device; audio from a driver assistance application of the vehicle; audio from an alert system of the vehicle; and audio from a different audio source to the second audio; and
the second audio comprises one or more of audio from a radio station; audio from an in-vehicle entertainment system; and audio from a different audio source to the first audio.

In one or more examples, the controller is configured to provide said first audio and said second audio for audible presentation to an amplifier that is connected to said plurality of speakers.

In one or more embodiments, the context information is indicative of one or more vehicle occupants to whom the first audio should be directed and the perceived-direction-effect is configured to present the first audio such that the particular direction from which the first audio will be perceived to originate corresponds to the location of the one or more vehicle occupants in the vehicle.

In one or more embodiments, wherein in relation to the context information, the controller is configured to perform one or both of the following:
i) the controller is configured to receive context information at a context information input from a context controller; and
ii) the controller is configured to determine the context information based on which of a plurality of audio inputs the first audio is received wherein the first audio is receivable on a plurality of different audio inputs including said first audio input.

In one or more embodiments, the delay is less than 10ms.

According to a second aspect of the present disclosure there is provided a method of presenting audio in a vehicle based on first audio received at a first audio input and second audio received at a second audio input, the method comprising the following:
based on said first audio and said second audio for presentation in a vehicle and context information associated with said first audio;
provide for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio.

According to a third aspect of the present disclosure there is provided a vehicle including the vehicle audio presentation controller of the first aspect.

According to a fourth aspect there is provided a computer program or computer program product including computer program code configured, when executed by a processor, to perform the method of the second aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
- Figure 1: shows an example embodiment of a vehicle audio presentation controller;
- Figure 2: shows an example method; and
- Figure 3: shows a vehicle including said vehicle audio presentation controller.

It is becoming more common for vehicles to present the occupants of the vehicle with audible announcements. The announcements may be pre-recorded or synthesized spoken announcements or one or more tones. The announcements may inform or notify the driver of, for example, traffic jam information, voice guided navigation and all kinds of audible notifications from in-vehicle safety systems or driver assistance systems. The announcements may be directed to any one or more of the occupants of the vehicle such as to a driver or a passenger, such as if it is determined that a seatbelt is not fastened.

The vehicle may have an in-vehicle entertainment system through which the announcements are played. The in-vehicle entertainment/sound system may also have functionality to listen to audio for entertainment such as pre-recorded or streamed music or radio stations. In other examples, the announcements may be played through an audio output device separate from the in-vehicle entertainment system.

Announcements may, often, only be relevant for a target vehicle occupant (such as the driver or a specific passenger) and can be annoying for the other vehicle occupants and could even distract the driver. In one or more examples, these announcements may be played in a way that does not disturb or distract the non-targeted vehicle occupants and on the other hand they should be as clear as possible. In one or more examples, they may be addressed to the relevant vehicle occupant. In one or more examples, the announcements may be presented to reduce their impact on audio that is already being presented. In one or more examples, it has been found that positioning of the sound may also intensify the purpose of the announcement.

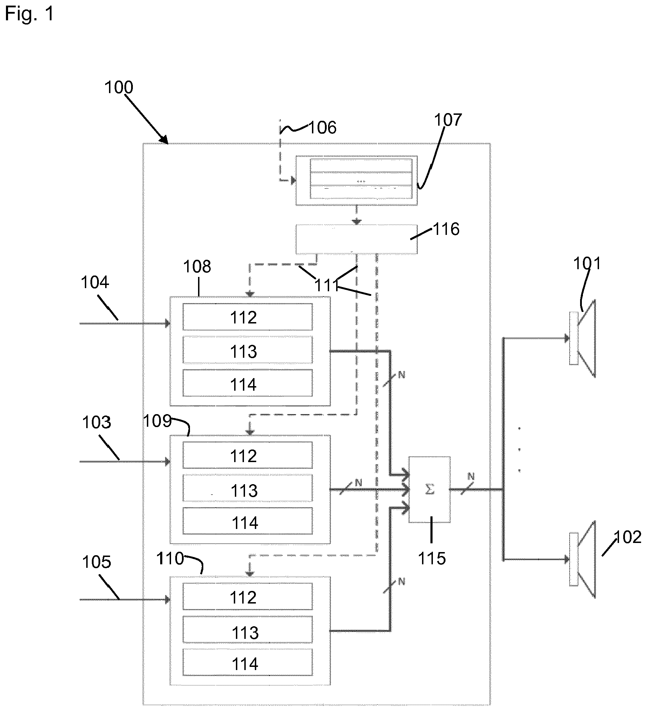

Figure 1 shows an example vehicle audio presentation controller 100. The vehicle audio presentation controller 100 may be part of or coupled with an in-vehicle entertainment system that includes an amplifier (not shown) and a plurality of speakers 101, 102. The controller 100 may therefore control the audible presentation of audio by the in-vehicle entertainment system. In other examples, the controller 100 may control the output of audio that is presented by a plurality of different audio presentation systems, which may include the in-vehicle entertainment system. The controller 100 includes a first audio input 103 to receive first audio for audible presentation. The first audio, in one or more examples, comprises an announcement. The source of the first audio may be an in-vehicle navigation system (not shown) or other audio source.

The controller 100 of the present example further includes a second audio input 104 to receive second audio for audible presentation. The second audio, in one or more examples, comprises audio from an entertainment system, such as a radio, CD player or MP3 player and the like. The source of the second audio may be the in-vehicle entertainment system of which the controller 100 forms part.

Thus, in one or more examples, the second audio may comprise audio that is provided for on-going presentation, such as a continual audio stream, while the first audio may comprise a series of one or more, intermittently presented, audible announcements. In other examples, the first and second audio may comprise other forms of audio from different audio sources.

It will be appreciated that the controller 100 may present audio, either for entertainment or announcements, from further inputs. Accordingly, in this example a third audio input 105 is shown via which third audio is received. The third audio, in one or more examples, comprises one or more announcements. The source of the third audio may be an in-vehicle safety system (not shown), although it may be any source of audio announcements.

The controller 100 further comprises a context information input 106 for receipt of context information. The context information may be indicative of the target of the first audio announcement, such as the driver, front passenger, rear seat passenger etc. The context information may be indicative of whether the second audio is currently being provided. The context information may be indicative of a mode of audible presentation that the controller 100 should use when controlling the audible presentation of the first audio, second audio and one or more further audio (if present). Thus, in one or more examples, the controller 100 may be instructed to present one or more of the first, second and third audio in a particular way i.e. with one or more audio-modifying effects. In one or more other embodiments, the controller 100 may be configured to determine how to present one or more of the first, second and third audio based on the context information and one or more other parameters.

In one or more examples, the controller 100 comprises a store 107 of a plurality of different predetermined audio-modifying-effect-profiles. The predetermined audio-modifying-effect-profiles may each comprise one or more instructions for application of one or more audio-modifying effects. The audio-modifying effects may be configured to modify two of, a subset of, or all of the audio received by the controller 100. The audio-modifying effects may modify the first, second or third audio in terms of volume (i.e. signal amplitude), frequency or timing of presentation between the speakers 101, 102. While in this example a limited number of audio-modifying-effect-profiles may be provided for selection by the controller from the store 107, in other examples the controller may "select" an audio-modifying-effect-profile based on all possible combinations of the one or more audio-modifying-effects available to the controller. Thus, in such an example, the store 107 may not be present as the controller determines the combination of audio-effects and/or settings of the or each individual audio-effect to apply.

The selection of one of the plurality of different predetermined audio-modifying-effect-profiles may provide for control of audio-effect application blocks 108, 109, 110 which are configured to apply the audio-modifying effects respectively to the first, second and third audio. Accordingly, the audio-modifying-effect-profile may be considered as one or more presentation parameters, defining the application of audio-modifying-effects, which are actioned by the audio-effect application blocks 108, 109, 110.

In one or more examples, the controller may be configured to provide for presentation of the first audio without consideration of one or more other audio being presented (e.g. such as the second and third audio). In one or more examples, the controller may be configured to provide for presentation of the first audio with an audio-modifying effect profile the selection of which was based on consideration of one or more other audio being presented (e.g. such as the second and third audio). In one or more examples, the controller may be configured to provide for presentation of the second audio with an audio-modifying effect profile the selection of which was based on consideration of one or more other audio being presented (e.g. such as the first and third audio).

Accordingly, the vehicle audio presentation controller 100 may be configured to perform the following:
based on the first audio and the second audio, received at the first and second audio input 104, 105, for presentation in a vehicle, the vehicle having a plurality of speakers 101, 102 at spaced locations in the vehicle and context information associated with said first audio, received at input 106; provide for audible presentation of at least said first audio and said second audio by said plurality of speakers 101, 102 with an audio-modifying-effect-profile of the plurality of different predetermined audio-modifying-effect-profiles of store 107. The audio-modifying-effect profile may be selected at least based on the context information received at context information input 106. As mentioned above, the audio-modifying-effect-profile comprises a plurality of audio-modifying effects which at least include a first and a second audio-modifying effect, the first audio-modifying effect applied to the first audio and the second audio-modifying effect applied to the second audio.

Accordingly, based on when the first audio is presented, a plurality of audio-modifying effects are selected that affects the presentation of the first audio and the second audio, which may be configured to make the first audio stand out over the second audio, at least for a target occupant and may be configured to make the audible presentation of the first audio less intrusive for the non-target occupants. When there are no announcements i.e. no first audio, the audio-modifying-effect-profile applied during presentation of the first audio may not be applied.

The audio-modifying effects applied to the first and second audio may be of the same type or different types. For example, a monophonic effect may be applied to the second audio to remove the presentation of stereophonic effects, while the first audio announcement may be presented with a directional effect such that it is perceived from a particular location. Alternatively, a channel decorrelation effect may be applied to the second audio to make the audio more diffuse, so that it is perceived as emanating broadly from around the listener. In one or more examples, the decorrelation effect may modify the audio such that audio signals sent to different channels/speakers, such as left and right speakers, are statistically uncorrelated, or the level of correlation is reduced. In one or more examples, the second audio may be attenuated over some but not all frequencies to make a "frequency window" for presentation of the first audio, which may be applied with a boost of such frequencies or with a directional effect, for example. It will be appreciated that many different combinations of audio-modifying effects may be applied. Accordingly, the audio-modifying effects may be selected from perceived-direction-effect, tone-volume-effect, relative-volume-effect, monophonic effect, decorrelation effect and others.

In one or more examples, the plurality of audio-modifying effects may include a perceived-direction-effect configured to present the first audio to one of the plurality of speakers (101 for example) with a delay relative to another of the plurality of speakers (102 for example) such that the first audio is thereby perceived to originate from a particular direction. In one or more examples, the plurality of audio-modifying effects may include a channel decorrelation effect configured to make the second audio source more diffuse, such that the second audio is perceived not to originate from a particular direction.

The introduction of a delay provides for application of the Haas effect, also known as the precedence effect, to the first or second audio which exploits the fact that the perceived spatial location or direction towards the audio is dominated by the direction from which the earliest arriving audio is heard. Thus, with the speakers 101, 102 located at different positions in the vehicle, providing for introduction of a delay such that there is a relative offset between the first or second audio being provided to said speakers, the controller 100 can control the perceived direction from which the sound is heard.

Thus, in one or more examples, the first audio may comprise an announcement from a navigation device. The context information may indicate that the first audio is thus intended for the driver. The audio-modifying-effect-profile selected by the controller 100 may therefore cause the application of a perceived-direction effect such that the audio is perceived from a direction corresponding to the driver, such as from a direction nearer to the driver than any other vehicle occupant. The audio-modifying-effect-profile selected by the controller 100 may further cause the application of a monophonic effect to the second audio to temporarily remove stereophonic presentation of the (stereophonic) second audio. The audio-modifying-effect-profile selected by the controller 100 may further cause the application of a channel decorrelation effect to the second audio to make the second audio more diffuse. Accordingly, the directional nature of the first audio (due to the perceived-direction effect) will stand out against the second audio which has the "directional" nature of its stereophonic presentation removed (due to the monophonic effect and/or channel decorrelation effect).

In another example, the first audio may comprise an announcement from a safety device that has detected that the front-seat passenger has not fastened their seatbelt. The context information may indicate that the first audio is thus intended for the front-seat passenger. The audio-modifying-effect-profile selected by the controller 100 may therefore cause the application of a perceived-direction effect such that the audio is perceived from a direction corresponding to the front-seat passenger, such as from a direction nearer to the front-seat passenger than any other vehicle occupant. The audio-modifying-effect-profile selected by the controller 100 may further cause the application of a perceived-direction effect to the second audio to temporarily position the second audio away from the front-seat passenger. Accordingly, the application of the perceived-direction effect to both the first and second audio but with different perceived directions may make the first audio stand out to the front-seat passenger.

The delay of the perceived-direction effect may be less than 5ms, 10ms, 15ms, 20ms or 25ms. The relative delay required to achieve the perceived direction effect may depend on the configuration of the speakers 101, 102 in the vehicle. The controller 101 may have speaker arrangement information available to it or it may be preprogrammed with such information so that an appropriate delay for the desired perceived direction can be achieved.

The controller may be configured to apply one or combinations of audio-modifying effects based on the second audio or the presence/absence of the second audio. Thus, the selection of the audio-modifying-effect-profile may be further based on the audio content of the second audio and/or its on-going presentation at the time of presentation of the first audio announcement. As mentioned above, the second audio may comprise music which may be presented for a longer time period, and typically a much longer time period, compared to the temporal length of the individual announcements that comprise the first audio. The announcements, which comprise the first audio, may be presented as required, with periods in-between where no first audio requires presentation. In the periods of time between announcements the first audio may be considered absent or silent. Thus, as discussed in more detail below, the application of the audio-modifying-effect-profile may be based on the times when the controller 100 is provided with first audio to audibly present. The controller 100 may be configured not to apply the audio-modifying-effect-profile based on the times when the controller 100 is not provided with first audio to audibly present.

The controller 100 may be configured to base the selection the audio-modifying-effect-profile on the second audio in one or more ways. In one or more examples, the controller 100 may be configured to base the selection the audio-modifying-effect-profile on the frequency content of the second audio, such as the amplitude of different frequency components of the second audio. In one or more examples, the controller 100 may be configured to base the selection the audio-modifying-effect-profile on the volume of the second audio. In one or more examples, the volume of the second audio may comprise a parameter on which selection of the audio-modifying-effect profile is made. For example, when the second audio is being played loudly, such as above a threshold, a different set of effects may be required to make the first audio effectively audible compared to when the second audio is played quietly.

Referring again to figure 1, the controller 100 may control the audio-effect application blocks 108, 109, 110 by way of the selection of the audio-modifying-effect profile, shown by dashed control lines 111. In this example, a separate audio-effect application block 108, 109, 110 is shown for each audio source. However, in other examples, a combined audio-effect application block for a plurality of the received audio inputs may be provided.

Each audio-effect application block 108, 109, 110 includes an audio-effect block 112, 113, 114 for applying a specific audio effect based on the selected audio-modifying-effect profile. The first audio-effect block 112 of each audio-effect application blocks 108, 109, 110 comprises a tone-control effect block for applying an audio-modifying effect that changes the tone of the audio in some way. The second audio-effect block 113 of each audio-effect application blocks 108, 109, 110 comprises a perceived-direction effect block configured to apply the perceived-direction-effect. The third audio-effect block 114 of each audio-effect application blocks 108, 109, 110 comprises a relative-volume-effect block configured to apply a relative-volume-effect that changes the volume of the audio presented on one speaker 101 relative to another speaker 102.

It will be appreciated that in other examples different audio-effect blocks 112, 113, 114 may be provided. It will also be appreciated in other examples different audio-effect blocks or combinations thereof for different audio inputs 103, 104, 105 may be provided.

The controller 100 may be configured to apply at least two audio-modifying effects to the same audio by way of the audio-effect blocks 112, 113, 114.

In examples where third, fourth or more audio is provided to the controller 100, the further audio effects may apply to any combination of them as provided for in the selected audio-modifying-effect profile.

The tone-control effect block 112 may apply audio-modifying effects that change the tone in different ways. For example, the tone based effect applied by block 112 may attenuate or boost particular frequency components or compress or expand the dynamic range of the frequency components of the audio.

Thus, the first audio, second audio and third audio may comprise audio having one or more frequency components. For example the first audio may comprise a particular tone, combination of tones, a series of time-spaced tones, or a voice, all of which may have a spectra of frequency components of different amplitudes at different frequencies. A single tone may have a single frequency component while voice audio may have a plurality of frequency components over a particular range of frequencies. The tone-control effect block 112 may use one or more of the frequency range of the audio, an average frequency of the audio, the spectra of the audio in application of the audio-modifying effect. The block 112 may determine the frequency components with different levels of granularity as required by the audio-modifying effect applied.

In one or more examples, the tone-control effect block 112 may be configured to apply a tone-volume-effect. The tone volume-effect (of block 109) may be configured to reduce the volume of a sub-set of the frequency components of the second audio relative to the frequency components outside the sub-set, the frequency components of the sub-set corresponding, at least in part, to the frequency components of the first audio.

Thus, the tone control effect block 112 may determine the frequency components, such as the frequency range of the first audio. The tone volume-effect may use the frequency range of the first audio to attenuate a corresponding frequency range in the second audio. Thus, a sub-set of the frequencies of the second audio may be attenuated to "make room" for the presentation of the first audio. Such an effect may provide reduced perceptual masking of the first audio announcement given the presentation of the second audio music, for example. Thus, the announcement may be easier to perceive when audible presented with the second audio with such a tone volume-effect applied.

In other examples, the first audio announcement may have a wider frequency range than the second audio. Accordingly, presentation of the first audio announcement may, to the dismay of the vehicle occupants, drown out the second audio. Accordingly, in one or more examples, the tone volume-effect (applied by tone control effect block 112 of block 108) may be configured to reduce the volume of a sub-set of the frequency components of the first audio relative to the frequency components outside the sub-set, the frequency components of the sub-set corresponding, at least in part, to the frequency components of the second audio.

The perceived-direction control block 113 of block 108, as mentioned above may apply the perceived-direction-effect configured to present the first audio to one of the plurality of speakers 101, 102 with a delay relative to another of the plurality of speakers such that the first audio is thereby perceived to originate from a particular direction or location relative to the vehicle occupant. The perceived-direction-effect may determine its positioning of the audio using techniques such as a head-related transfer function or ambisonic audio presentation techniques. The perceived-direction control block 113 of the other blocks 109, 110 may apply such an effect to the second and third audio respectively.

The relative-volume-effect block 114 may be configured to apply a relative-volume-effect configured to present the first audio to one of the plurality of speakers with a different volume relative to another of the plurality of speakers. Likewise, the relative-volume-effect block 114 of the blocks 109, 110 may be configured to apply a relative-volume-effect configured to present the second and third audio respectively to one of the plurality of speakers with a different volume relative to another of the plurality of speakers.

The output from the audio-effect application blocks 108, 109, 110 may each comprise N channels, each channel intended for a respective speaker 101, 102. The controller 101 may include a summation block 115 to combine the first, second and third audio from the audio-effect application blocks 108, 109, 110 into a combined audio signal. The summation block 115 may provide said combined audio signal to an amplifier associated with the speakers 101, 102 or to the speakers 101, 102 directly, as appropriate. In other examples, the output from the audio-effect application blocks 108, 109, 110 may be passed to different amplifiers or different sets of speakers for presentation.

The controller 100 may be configured to operate on-the-fly and actively select the audio-modifying effect profile based on the context information and the frequency components of one or more of the first, second, third audio being presented. In one or more embodiments, the controller 100 may analyse one or both of the first audio announcement and a sample of the second audio, such as the whole or part of the announcement, and determine an audio-modifying effect profile based on the context information and one or more of the first, second and third audio. Thus, in one or more examples, the selected audio-modifying effect profile may be applied for the total duration of the first audio announcement. Alternatively, in one or more examples, different audio-modifying effect profiles may be selected over the duration of the first audio announcement (such as with frequency component changes of the second audio music).

In the above examples, the audio-modifying effects may be applied exclusively at times the first audio is provided for audible for presentation. However, in one or more examples, the controller 100 may receive the first audio, apply an audio-modifying effect profile that modifies the second audio prior to audible presentation of the first audio, such as for a threshold time, and then provide for audible presentation of the first audio with the same or a different audio-modifying effect profile. In such an example, the audio-modifying effect profile applied may provide an introduction or warning to one or more vehicle occupants that first audio is about to be audibly presented.

Thus, the controller 101, based on the on-going presentation of the second audio (e.g. music) at the time the first audio (e.g. announcement) is received at the first input 103, is configured to apply an audio-modifying effect of the audio-modifying-effect-profile to the second audio in advance of the first audio being audibly presented. Said effect may be applied at least 0.1, 0.2, 0.3, 0.4, 0.5, 0.6, 0.7, 0.8, 0.9 or 1 second in advance.

The application of the audio-modifying effects defined by an audio modifying effect profile may be perceived as abrupt change in audible presentation of the audio. Accordingly, in one or more examples, the controller 100 may include a parameter interpolator 116 that may be configured to interpolate the parameters provided by an audio-modifying effect profile and a directly subsequent audio-modifying effect profile. Thus, the controller 100 may be configured to apply an audio-modifying-effect-profile gradually, such as over a transition time. The transition time may be variable and may be based on the length of the first audio announcement for example.

As mentioned above, the first audio may comprise an announcement. The first audio may comprise one or more of an announcement for one or more vehicle occupants; an audible alert for one or more vehicle occupants; audio from a navigation device; audio from a driver assistance application of the vehicle; audio from an alert system of the vehicle; and audio from a different audio source to the second audio.

The second audio may comprise one or more of audio from a radio station; audio from an in-vehicle entertainment system; and audio from a different audio source to the first audio, such as from an auxiliary input of the in-vehicle entertainment system.

The context information may comprise information which the controller 100 uses to make a selection of the audio-modifying-effect profile along with other information. The context information may comprise an explicit instruction to use a specific audio-modifying-effect profile.

In one or more examples, the context information is indicative of one or more vehicle occupants, e.g. driver, front seat passenger, left/right/centre rear seat passengers, to whom the first audio should be directed. Thus, based on this, the controller may be configured to select an audio-modifying-effect profile that includes a perceived-direction-effect that is configured to present the first audio such that the particular location from which the first audio will be perceived to originate corresponds to the location of the one or more vehicle occupants identified in the context information.

In the above example, the controller is configured to receive context information at the context information input 106 from a context controller that provides (at least part) instruction on which audio-modifying effect profile to select. In one or more examples, the context information input 106 is not provided and instead the context information is provided to the controller by virtue of what audio is provided at its inputs 103, 104, 105.

It will be appreciated that the controller, in one or more examples, may not have knowledge of the actual positions of occupants in the vehicle and may thus, where it is mentioned that audio is directed towards a particular vehicle occupant, the controller 100 may provide for application of the audio-modifying effects to particular audio channels of a multi-channel arrangement, each channel configured to be presented by a different speaker at a particular location in the vehicle, such that the effect is that audio is presented preferentially to that occupant.

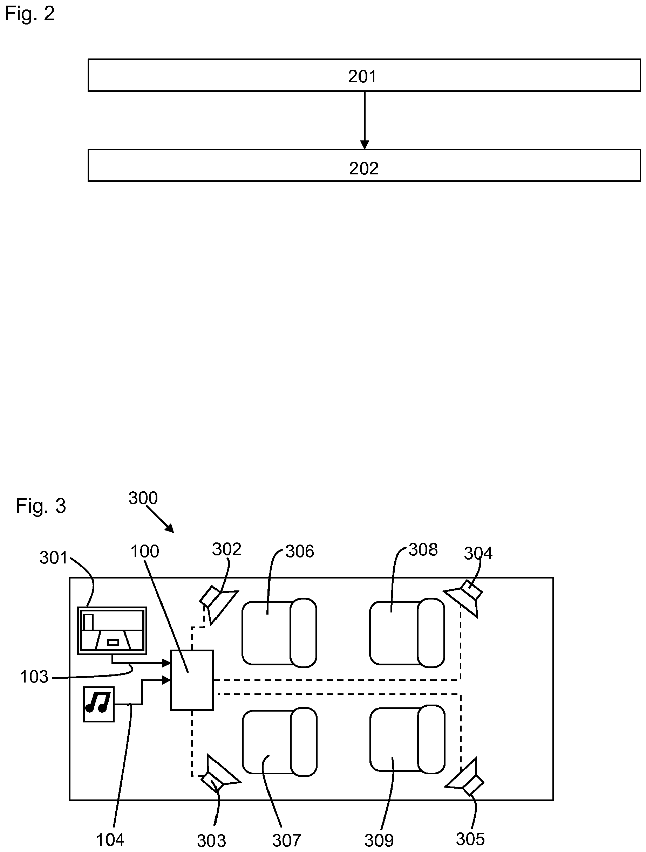

Figure 2 shows a method based on 201 said first audio and said second audio for presentation in a vehicle and context information associated with said first audio; provide for 202 audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio.

Figure 3 shows a vehicle 300 including the vehicle audio presentation controller 100. In this example, the first audio input 103 for receiving first audio is connected to a navigation system 301. Further, in this example, the second audio input 104 is connected to an in-vehicle entertainment system. The controller 100 is further connected to speakers 302-305. The speakers may be arranged at spaced locations in the vehicle 300 to present audio to the occupants (seats 306-309 shown). It will be appreciated that other devices may be connected to the audio inputs 103, 104. It will be appreciated that other numbers of speakers may be provided.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A vehicle audio presentation controller configured to receive first audio at a first audio input and second audio at a second audio input, the controller configured to perform the following:
based on said first audio and said second audio for presentation in a vehicle and context information associated with said first audio;
provide for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio.

2. The vehicle audio presentation controller of claim 1, wherein at least one of the plurality audio-modifying effects comprises;
a perceived-direction-effect configured to present one of the first audio and the second audio to one of a plurality of speakers at spaced locations in the vehicle with a delay relative to another of the plurality of speakers such that the one of the first audio and the second audio is thereby perceived to originate from a particular direction

3. The vehicle audio presentation controller of claim 1 or 2, wherein at least one of the plurality audio-modifying effects comprises;
a decorrelation effect configured to present one of the first audio and the second audio to at least two of a plurality of speakers at spaced locations in the vehicle such that the one of the first audio and the second audio is perceived not to originate from a particular direction.

4. The vehicle audio presentation controller of claim 2 or claim 3, wherein:
the audio-modifying-effect-profile of the plurality of different predetermined audio-modifying-effect-profiles is selected at least based on at least the context information and one or more of:
a) the volume of second audio;
b) the frequency content of the second audio.

5. The vehicle audio presentation controller of any preceding claim, wherein
the controller includes a respective audio-effect application block coupled to the first and second audio inputs, each audio-effect application block configured to apply one or more of the plurality of audio-modifying effects to the respective first audio and second audio.

6. The vehicle audio presentation controller of any preceding claim, wherein the first audio comprises audio having a plurality of frequency components and the second audio comprises audio having a plurality of frequency components; and at least one of the plurality of audio-modifying-effects comprises:
a tone-volume-effect configured to reduce the volume of a sub-set of the frequency components of the second audio relative to the frequency components outside the sub-set, the frequency components of the sub-set corresponding, at least in part, to the frequency components of the first audio.

7. The vehicle audio presentation controller of any preceding claim, wherein the controller, based on the on-going presentation of the second audio at the time the first audio is received at the first input, is configured to apply an audio-modifying effect of the audio-modifying-effect-profile to the second audio in advance of the first audio being audibly presented.

8. The vehicle audio presentation controller of any preceding claim, wherein the plurality of audio-modifying-effects includes the following audio-modifying effect:
a relative-volume-effect configured to present one of the first audio and the second audio to one of the plurality of speakers with a different volume relative to another of the plurality of speakers.

9. The vehicle audio presentation controller of any preceding claim, wherein one or more of the audio-modifying effects of the audio-modifying-effect-profile are applied gradually.

10. The vehicle audio presentation controller of any preceding claim, wherein:
the first audio comprises one or more of an announcement; an audible alert; audio from a navigation device; audio from a driver assistance application of the vehicle; audio from an alert system of the vehicle; and audio from a different audio source to the second audio; and
the second audio comprises one or more of audio from a radio station; audio from an in-vehicle entertainment system; and audio from a different audio source to the first audio.

11. The vehicle audio presentation controller of claim 2 wherein the context information is indicative of one or more vehicle occupants to whom the first audio should be directed and the perceived-direction-effect is configured to present the first audio such that the particular direction from which the first audio will be perceived to originate corresponds to the location of the one or more vehicle occupants in the vehicle.

12. The vehicle audio presentation controller of claim 1, wherein in relation to the context information, the controller is configured to perform one or both of the following:
i) the controller is configured to receive context information at a context information input from a context controller; and
ii) the controller is configured to determine the context information based on which of a plurality of audio inputs the first audio is received wherein the first audio is receivable on a plurality of different audio inputs including said first audio input.

13. The vehicle audio presentation controller of claim 2, wherein the delay is less than 10ms.

14. A method of presenting audio in a vehicle based on first audio received at a first audio input and second audio received at a second audio input, the method comprising the following:
based on said first audio and said second audio for presentation in a vehicle and context information associated with said first audio;
provide for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio.

15. A vehicle including the vehicle audio presentation controller of any one of claims 1 to 13.

## Amended claims

### Amended claims in accordance with Rule 137(2) EPC.

1. A vehicle audio presentation controller (100) configured to receive first audio at a first audio input (103) and second audio at a second audio input (104), the controller configured to perform the following:
based on said first audio and said second audio for presentation in a vehicle and context information associated with said first audio;
provide for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio;
wherein the audio-modifying effects comprise at least one of:
a decorrelation effect configured to present one of the first audio and the second audio to at least two of a plurality of speakers (101, 102, 302 - 305) at spaced locations in the vehicle such that the one of the first audio and the second audio is perceived not to originate from a particular direction;
a monophonic effect applied to the second audio wherein the stereophonic effects of the second audio are removed and a directional effect applied to the first audio, such that the first audio is perceived from a particular location; and
a tone-volume-effect, wherein the first audio comprises audio having a plurality of frequency components and the second audio comprises audio having a plurality of frequency components, the tone-volume-effect configured to reduce the volume of a sub-set of the frequency components of the second audio relative to the frequency components outside the sub-set, the frequency components of the sub-set corresponding, at least in part, to the frequency components of the first audio.

2. The vehicle audio presentation controller (100) of claim 1, wherein at least one of the plurality audio-modifying effects comprises;
a perceived-direction-effect configured to present one of the first audio and the second audio to one of a plurality of speakers (101, 102, 302 - 305) at spaced locations in the vehicle (300) with a delay relative to another of the plurality of speakers such that the one of the first audio and the second audio is thereby perceived to originate from a particular direction.

3. The vehicle audio presentation controller (100) of claim 1 or claim 2, wherein:
the audio-modifying-effect-profile of the plurality of different predetermined audio-modifying-effect-profiles is selected at least based on at least the context information and one or more of:
a) the volume of second audio;
b) the frequency content of the second audio.

4. The vehicle audio presentation controller (100) of any preceding claim, wherein
the controller includes a respective audio-effect application block (108, 109, 110) coupled to the first and second audio inputs (103, 104), each audio-effect application block configured to apply one or more of the plurality of audio-modifying effects to the respective first audio and second audio.

5. The vehicle audio presentation controller (100) of any preceding claim, wherein the controller, based on the on-going presentation of the second audio at the time the first audio is received at the first input, is configured to apply an audio-modifying effect of the audio-modifying-effect-profile to the second audio in advance of the first audio being audibly presented.

6. The vehicle audio presentation controller (100) of any preceding claim, wherein the plurality of audio-modifying-effects includes the following audio-modifying effect:
a relative-volume-effect configured to present one of the first audio and the second audio to one of the plurality of speakers (101, 102, 302 - 305) with a different volume relative to another of the plurality of speakers.

7. The vehicle audio presentation controller (100) of any preceding claim, wherein one or more of the audio-modifying effects of the audio-modifying-effect-profile are applied gradually.

8. The vehicle audio presentation controller (100) of any preceding claim, wherein:
the first audio comprises one or more of an announcement; an audible alert; audio from a navigation device; audio from a driver assistance application of the vehicle; audio from an alert system of the vehicle; and audio from a different audio source to the second audio; and
the second audio comprises one or more of audio from a radio station; audio from an in-vehicle entertainment system; and audio from a different audio source to the first audio.

9. The vehicle audio presentation controller (100) of claim 2 wherein the context information is indicative of one or more vehicle occupants to whom the first audio should be directed and the perceived-direction-effect is configured to present the first audio such that the particular direction from which the first audio will be perceived to originate corresponds to the location of the one or more vehicle occupants in the vehicle.

10. The vehicle audio presentation controller (100) of claim 1, wherein in relation to the context information, the controller is configured to perform one or both of the following:
i) the controller is configured to receive context information at a context information input from a context controller; and
ii) the controller is configured to determine the context information based on which of a plurality of audio inputs the first audio is received wherein the first audio is receivable on a plurality of different audio inputs including said first audio input.

11. The vehicle audio presentation controller of claim 2, wherein the delay is less than 10ms.

12. A method of presenting audio in a vehicle based on first audio received at a first audio input and second audio received at a second audio input, the method comprising the following:
based on (201) said first audio and said second audio for presentation in a vehicle and context information associated with said first audio;
provide (202) for audible presentation of said first audio and said second audio at the same time with an audio-modifying-effect-profile of a plurality of different predetermined audio-modifying-effect-profiles selected at least based on the context information, the audio-modifying-effect-profile comprising a plurality of audio-modifying effects at least including a first and a second audio-modifying effect, the first audio-modifying effect applied to the first audio and the second audio-modifying effect applied to the second audio wherein the audio-modifying effects comprise at least one of:
a decorrelation effect configured to present one of the first audio and the second audio to at least two of a plurality of speakers at spaced locations in the vehicle such that the one of the first audio and the second audio is perceived not to originate from a particular direction;
a monophonic effect applied to the second audio wherein the stereophonic effects of the second audio are removed and a directional effect applied to the first audio, such that the first audio is perceived from a particular location; and
a tone-volume-effect, wherein the first audio comprises audio having a plurality of frequency components and the second audio comprises audio having a plurality of frequency components, the tone-volume-effect configured to reduce the volume of a sub-set of the frequency components of the second audio relative to the frequency components outside the sub-set, the frequency components of the sub-set corresponding, at least in part, to the frequency components of the first audio.

13. A vehicle including the vehicle audio presentation controller of any one of claims 1 to 11.
